# EUROPÄISCHE PATENTANMELDUNG

(11) **EP 4 187 423 A1**
(43) Veröffentlichungstag der Anmeldung: **31.05.2023**
(21) Anmeldenummer: 21211418.5
(22) Anmeldetag: 30.11.2021
(51) Int. Cl.: G06F 21/62, G06F 21/53

(54) **DURCHSETZUNG VON INTEGRITÄTSBEDINGUNGEN EINER ERSTEN CONTAINER-BASIERTEN ANWENDUNG**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren zur Durchsetzung von Integritätsbedingungen einer ersten Container-basierten Anwendung (Appl) gegenüber allen zweiten Container-basierten Anwendungen (App2), die auf einer gemeinsamen Laufzeitumgebung (LU) eines Hostsystems (HS) ausgeführt werden, umfassend:
- Zuordnen einer ersten Integritätsrichtlinie (IR1) zu einer ersten Bereitstellungsinformation (BI1) der ersten Anwendung (Appl), wobei die erste Integritätsrichtlinie (IR1) mindestens eine Anforderung mit Bezug auf die zweite Anwendung (App2) und die erste Bereitstellunginformation (BI1) mindestens eine Eigenschaft der ersten Anwendung (Appl) umfasst, Empfangen der ersten Bereitstellungsinformation (BI1) und der ersten Integritätsrichtlinie (IR1) von einem Benutzer der ersten Anwendung (Appl) auf der Laufzeitumgebung (LU),
vor dem Start einer ersten Containerinstanz (CI1) der ersten Anwendung (Appl), Überprüfen der ersten Bereitstellungsinformation (BI1) gegenüber einer zweiten Integritätsrichtlinie (IR2, ..., IRn), die einer zweiten Bereitstellungsinformation (BI2, ..., BIn) der zweiten Anwendung (App2, ..., Appn) zugeordnet ist, für jede zweite Anwendung (App2, ..., Appn), Überprüfen der zweiten Bereitstellungsinformationen (BI2) für jede der zweiten Anwendungen (App2, ..., Appn) gegenüber der ersten Integritätsrichtlinie (IR1), Melden eines Verstoßes, umfassend die Eigenschaften in der erste Bereitstellungsinformation (BI1) gegen die mindestens eine der zweiten Integritätsrichtlinien (IR2, ..., IRn) verstößt, und die Eigenschaften in der zweiten Bereitstellungsinformation (BI2, ..., BIn) gegen die die ersten Integritätsrichtlinien (IR1) verstößt an den Benutzer, Durchführen einer Operation zum Beheben des mindestens einen Verstoßes, und bei erfolgreichem Beheben des Verstoßes, Ausführen der ersten Containerinstanz (CI1) auf der Laufzeitumgebung (LU).

## Beschreibung

Die Erfindung betrifft Verfahren zur Durchsetzung von Integritätsbedingungen einer ersten Container-basierten Anwendung gegenüber (allen) mindestens einer zweiten Container-basierten Anwendung, die auf einer gemeinsamen Laufzeitumgebung eines Hostsystems ausgeführt werden.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Anwendung vom darunterliegenden Hostsystem ab. Anwendungen, auch Applikationen genannt, werden mittlerweile in vielen Bereichen wie beispielsweise in der Industrieautomation und in der Prozesssteuerung, aber auch für Anwendungen in Transportsystemen oder Fahrzeugen mittels Container implementiert.

Um einen Container auf dem Hostsystem starten zu können, wird ein Containerabbild benötigt, welches neben einem Anwendungsprogramm, auch Applikationssoftware genannt, die für das Anwendungsprogramm erforderlichen Binärprogramme und Bibliotheken enthält. Auf dem Hostsystem wird aus dem Containerabbild ein Container, genauer eine Containerinstanz, erstellt und auf einer Laufzeitumgebung, wie beispielsweise "Docker ausgeführt. Bei Bedarf, beispielsweise bei einem verstärkten Aufruf der Anwendung durch Nutzer, können aus dem gleichen Containerabbild weitere Containerinstanzen auf dem gleichen oder einem anderen Hostsystem, das auch als virtualisierte Hardware-Ressource ausgebildet sein kann, erzeugt und ausgeführt werden. Im Weiteren werden die Bezeichnungen Containerinstanz und Container synonym verwendet.

Beim Start der Containerinstanz werden den in der Containerinstanz genannten Prozessen Ausführungsberechtigungen, auch Privilegien genannt, zugeordnet und auch eine Einbindung von Geräten oder anderen Dateisystem-Ressourcen des darunterliegenden Geräts vereinbart. Um Angriffe durch die Anwendung auf das Hostsystem zu vermeiden, können diese Ausführungsberechtigungen eingeschränkt werden, sodass dem Container lediglich die für den Betrieb der Anwendung erforderlichen Rechte zugewiesen werden.

Üblicherweise besteht eine containerisierte Anwendung nicht aus einer einzigen isolierten Containerinstanz, sondern wird aufgrund einer Microservice-basierten Architektur im Verbund mit anderen Containerinstanzen als Gesamtanwendung bereitgestellt. Ein Zusammenspiel mehrerer Containerinstanzen bzw. ein Zusammenspiel deren virtueller Infrastruktur und insbesondere deren Laufzeit- und Prozessberechtigungen, wird hierbei unter anderem in einer Bereitstellungsinformation definiert. Im nichtorchestrierten Bereich kann hierfür beispielsweise ein von Docker spezifiziertes "docker-compose" Format verwendet werden.

Unterschiedliche Ersteller können Containerabbilder erstellen, mit deren Hilfe ein Betreiber Containerinstanzen auf seiner Laufzeitumgebung starten kann. Dabei besteht die Gefahr, dass Containerinstanzen einer Anwendung, die in einer Bereitstellungsinformation spezifiziert werden, vertrauliche Daten oder Laufzeitkonfigurationen einer anderen Anwendung bzw. Bereitstellungsinformation auslesen oder verändern. Es könnten auch unterschiedliche Ersteller das gleiche Containerabbild verwenden, die Containerinstanzen aber unterschiedliche Aufgaben übernehmen. Beispielsweise könnte ein Datenbank-Container, der auf einer Plattform zweimal in unterschiedlichen Anwendungen betrieben wird für unterschiedliche Aufgaben verwendet werden.

Es ist somit eine Aufgabe der vorliegenden Erfindung, ein Verfahren zu schaffen, in dem Integritätsanforderungen an andere Anwendungen bzw. an deren Bereitstellungsinformation gestellt werden können und diese ausgewertet und durchgesetzt werden können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Durchsetzung von Integritätsbedingungen einer ersten Container-basierten Anwendung gegenüber allen zweiten Container-basierten Anwendungen, die auf einer gemeinsamen Laufzeitumgebung eines Hostsystems ausgeführt werden, umfassend:
- Zuordnen einer ersten Integritätsrichtlinie zu einer ersten Bereitstellungsinformation der ersten Anwendung, wobei die ersten Integritätsrichtlinie mindestens eine Anforderung mit Bezug auf die zweite Anwendung umfasst und die erste Bereitstellunginformation mindestens eine Eigenschaft der ersten Anwendung umfasst,
- Empfangen der ersten Bereitstellungsinformation und der ersten Integritätsrichtlinie von einem Benutzer der ersten Anwendung auf der Laufzeitumgebung,
   vor dem Start einer ersten Containerinstanz der ersten Anwendung,
   - Überprüfen der ersten Bereitstellungsinformation gegenüber einer zweiten Integritätsrichtlinie, die einer zweiten Bereitstellungsinformation der zweiten Anwendung zugeordnet ist, für jede zweite Anwendung,
   - Überprüfen der zweiten Bereitstellungsinformationen für jede der zweiten Anwendungen gegenüber der ersten Integritätsrichtlinie,
   - Melden eines Verstoßes, umfassend die Eigenschaften in der erste Bereitstellungsinformation gegen die mindestens eine der zweiten Integritätsrichtlinien verstößt, und umfassend die Eigenschaften in der zweiten Bereitstellungsinformation gegen die die ersten Integritätsrichtlinien verstößt an den Benutzer,
   - Durchführen einer Operation zum Beheben des mindestens einen Verstoßes, und
- bei erfolgreichem Beheben des Verstoßes, Ausführen der ersten Containerinstanz auf der Laufzeitumgebung.

Das Verfahren kann auch beim Starten von mehr als einer Containerinstanz, für die mehreren Containerinstanzen durchgeführt werden. Die Integritätsrichtlinie ermöglicht es Anforderungen an die Konfiguration anderer Anwendungen und deren Containerinstanzen zu stellen, Verstöße gegen die Anforderungen zu erkennen, und Maßnahmen zu ergreifen. In der Integritätsrichtlinien sind Zugriffs- und Prozess-Berechtigungen anderer Containerinstanzen hinterlegt. Beispielsweise kann somit auf der Laufzeitumgebung des Hostsystems, beispielsweise einem industriellen Steuergerät, überprüft und verhindert werden, dass die erste Anwendung, die neu gestartet werden soll, Privilegien erhält, die es der ersten Anwendung bzw. ihrem Benutzer erlauben, Daten der zweiten Anwendung, die bereits auf der Laufzeitumgebung des Hostsystems ausgeführt wird, auszulesen oder zu modifizieren.

Des Weiteren wird durch das Verfahren ebenfalls überprüft, ob die Bereitstellungsinformation und darin enthaltene Privilegien oder Konfigurationseigenschaften der zu startenden ersten Anwendung konform mit der zweiten Integritätsrichtlinie jeder zweiten Anwendung ist, die bereits auf dem Hostsystem ausgeführt wird. Somit wird die gegenseitige Integrität der Anwendungen sichergestellt. Die erste Integritätsrichtlinie kann zusätzlich Anforderungen in Bezug auf die erste Bereitstellungsinformation für die erste Anwendung umfassen. Durch die Zuordnung der Integritätsrichtlinie zur Bereitstellungsinformation können individuelle Integritätsanforderungen für jede Installation der ersten Anwendung definiert werden.

Durch das Durchführen des Verfahrens vor dem Start einer jeden zur ersten Anwendung gehörenden ersten Containerinstanz kann die gegenseitige Integrität auch während der Laufzeit zwischen der zu diesem Zeitpunkt vorliegenden Konfiguration der ersten Anwendung und der zu diesem Zeitpunkt vorliegenden Konfiguration der zweiten Anwendung geprüft und gewährleistet werden.

In einer vorteilhaften Ausführungsform werden die erste Integritätsrichtlinie und die erste Bereitstellungsinformation von einem Erzeuger der ersten Bereitstellungsinformation bereitgestellt.

Der Erzeuger der ersten Bereitstellungsinformation ist beispielsweise ein Entwickler der Anwendung. Der Erzeuger der ersten Anwendung kann somit selbst Integritätsrichtlinien spezifisch für jede erste Anwendung und/oder die Laufzeitumgebung und/oder den Typ des Hostsystems, auf dem die Anwendung ausgeführt wird und/oder des Betreibers des Hostsystems festlegen und somit flexibel gestalten. Im Gegensatz zum Erzeuger ist der Benutzer der Anwendung, derjenige, der die erste Anwendung anwendet.

In einer vorteilhaften Ausführungsform wird zusätzlich die erste Bereitstellungsinformation gegenüber einer Laufzeit-Integritätsrichtlinie der Laufzeitumgebung überprüft und einen Verstoß, umfassend diejenigen Eigenschaften der ersten Bereitstellungsinformation, die gegen die Laufzeit-Integritätsrichtlinie (IR0) verstoßen, an den Benutzer gemeldet.

Dies ermöglicht es, Anforderungen der Laufzeitumgebung selbst zu spezifizieren und diese beim Start einer ersten Containerinstanz überprüfen und durchsetzen zu können. Bevorzugt wird die Laufzeit-Integritätsrichtlinie zeitlich vor dem Überprüfen der ersten und der zweiten Integritätsrichtlinie durchgeführt.

In einer vorteilhaften Ausführungsform sind die zweite Bereitstellungsinformation und die zweite Integritätsrichtlinie persistent auf dem Hostsystem gespeichert.

Dies ermöglicht es, das Überprüfen zu jeder Zeit durchzuführen, zu der eine erste Containerinstanz gestartet werden soll. Eine erste Containerinstanz kann nicht nur beim erstmaligen Starten der Anwendung auf der Laufzeitumgebung gestartet werden, sondern abhängig vom Funktionsumfang und Funktionsablauf innerhalb der Anwendung zu einem späteren Zeitpunkt gestartet werden. Auch aus Lastgründen, beispielsweise abhängig von der Anzahl der Aufrufe der Anwendung, kann eine weitere erste Containerinstanz mit beliebigem zeitlichen Abstand nach dem Starten der ersten Anwendung gestartet werden.

In einer vorteilhaften Ausführungsform werden die erste Bereitstellungsinformation und die zugeordnete erste Integritätsrichtlinie nach dem Beheben des Verstoßes auf dem Hostsystem gespeichert.

Dies ermöglicht es, die erste Integritätsrichtlinie und erste Bereitstellungsinformation für die Überprüfung der Integritätsrichtlinien von zeitlich nachfolgend zu startende Anwendung bereitzustellen. Wird die Anwendung bzw. die Containerinstanz in einer orchestrierten Umgebung gestartet, so werden die erste Bereitstellungsinformation und die zugeordnete erste Integritätsrichtlinie beispielsweise auf einer Orchestrierungseinheit gespeichert.

In einer vorteilhaften Ausführungsform wird die erste Integritätsrichtlinie (IR1) der ersten Bereitstellungsinformation (BI1) zugeordnet, indem die erste Integritätsrichtlinie (IR1) als ein Bestandteil der ersten Bereitstellungsinformation (BI1) angeordnet wird und/oder eine gemeinsame digitale Signatur über die erste Integritätsrichtlinie (IR1) und die ersten Bereitstellungsinformation (BI1) erstellt wird, oder eines eindeutiger Kenner der ersten Integritätsrichtlinie (IR1) und der ersten Bereitstellungsinformation (BI1) zugewiesen wird.

Die Bereitstellungsinformation wird gemeinsam mit der Integritätsrichtline signiert, sie ist Bestandteil der Bereitstellungsrichtline oder kann über eindeutige Bezeichner wie dem Namen der App oder zugewiesenen eindeutigen Labels referenziert werden.

In einer vorteilhaften Ausführungsform enthält die erste Integritätsrichtlinie mindestens eine Anforderung an die zweite Anwendung mit Bezug auf mindestens eines aus Privilegien zur Ausführung von Operationen, Zugriffsberechtigungen auf vorgegebene Dateisystempfade, eine vorgegebene Signatur und/oder einen vorgegebenen Erzeuger der Anwendung.

Dies ermöglicht es, Containerinstanzen durch eine Zuweisung von Privilegien bzw. deren Entzug unterschiedlich zu berechtigen und zu isolieren. Die Integritätsanforderungen können so basierend auf die gesicherte Identität des Erzeugers, oder auch der Integrität des Inhalts von erster oder zweiter Integritätsrichtlinie oder Bereitstellungseinheit bereitgestellt werden.

In einer vorteilhaften Ausführungsform ist jede der Anforderungen in der ersten Integritätsrichtlinie gültig für die zweite Anwendung als Ganzes oder gültig für mindestens eine der zweiten Containerinstanzen der zweiten Anwendung oder gültig für sowohl die ersten Containerinstanzen als auch die zweiten Containerinstanzen.

Dies ermöglicht es, Anforderungen flexibel für die gesamte zweite Anwendung, lediglich Teile, d.h. einzelne zweite Containerinstanzen der zweiten Anwendung oder auch für die gesamten oder Teile der ersten Containerinstanzen in der ersten Integritätsrichtlinie zu definieren.

In einer vorteilhaften Ausführungsform wird ein Geltungsbereich der ersten Integritätsrichtlinie durch eine Sprungmarke, die mindestens einem Containerabbild oder mindestens einer zweiten Bereitstellungsinformationen zugeordnet ist, festgelegt.

Dies ermöglicht es, einzelne Containerabbilder zu kennzeichnen und beim Start einer ersten Containerinstanz, die aus dem gekennzeichneten Containerabbild erstellt wurde, die Überprüfung der Integritätsrichtlinien durchzuführen. Somit ist eine Überprüfung von speziellen, beispielsweise Sicherheitsrelevante Prozesse enthaltende Containerabbilder möglich.

In einer vorteilhaften Ausführungsform wird über eine Benutzerschnittstelle der Verstoß dem Benutzer angezeigt und eine Instruktion zur Behebung des Verstoßes durch den Benutzer empfangen.

Somit kann dem Benutzer das Ergebnis der Überprüfung angezeigt werden. Der Benutzer kann interaktiv entscheiden, ob die mindestens eine den Konflikt verursachende erste oder zweite Anwendung mitsamt der bereitgestellten Integritätsrichtline gelöscht werden sollen.

In einer vorteilhaften Ausführungsform sind mindestens eine vordefinierte Regel zur Behebung des Verstoßes und daraus resultierende Instruktionen in der Laufzeitumgebung enthalten.

Dies ermöglicht eine automatische Behebung des Verstoßes. Dies kann insbesondere bei häufig auftretenden, gleichartigen Verstößen verwendet werden und reduzieren den zeitlichen und personellen Aufwand bei der Bereitstellung der Anwendung.

In einer vorteilhaften Ausführungsform wird in einer Anwendungsspezifischen Bereitstellungsrichtlinie die Behebung des Verstoßes über die Benutzerschnittstelle oder über die vordefinierte Regel und weitere Modalitäten zur Behebung des Verstoßes auf der Laufzeitumgebung bereitgestellt.

Dies ermöglicht eine auf die jeweilige Anwendung angepasste Behebung der gemeldeten Verstöße.

In einer vorteilhaften Ausführungsform umfasst die erste Bereitstellungsinformation eine Standardkonfiguration und mindestens eine Rückfallkonfiguration der Laufzeitumgebung für die erste Anwendung, wobei die Rückfallkonfiguration geringere Eigenschaften in Bezug auf die Privilegien zur Ausführung von Operationen, Zugriffsberechtigungen auf vorgegebene Dateisystempfade, die vorgegebene Signatur oder die vorgegebenen Erzeuger gegenüber der Standardkonfiguration umfasst, und die erste Anwendung wird zum Beheben des Verstoßes entsprechend einer der Rückfallkonfigurationen dynamisch durch die Laufzeitumgebung konfiguriert.

Dies ermöglicht es, die erste Anwendung trotz eines gemeldeten Verstoßes zu starten und die erste Anwendung mit geringeren Privilegien und dergleichen zu betreiben.

In einer vorteilhaften Ausführungsform wird in einer orchestrierten Umgebung das Überprüfen, Melden und Beheben durch eine Orchestrierungseinheit durchgeführt.

Dies ermöglicht es, die Integritätsrichtlinie auch in einer orchestrierten Umgebung, beim Starten von ersten Containerinstanzen zu prüfen.

Ein zweiter Aspekt der Erfindung betrifft ein System zur Durchsetzung von Integritätsbedingungen einer ersten Container-basierten Anwendung gegenüber allen zweiten Container-basierten Anwendungen, die auf einer gemeinsamen Laufzeitumgebung eines Hostsystems ausgeführt werden, umfassend eine Zuordnungseinheit, die derart ausgebildet ist
- eine erste Integritätsrichtlinie zu einer ersten Bereitstellungsinformation der ersten Anwendung zuzuordnen, wobei die erste Integritätsrichtlinie mindestens eine Anforderung mit Bezug auf die zweite Anwendung und die erste Bereitstellunginformation mindestens eine Eigenschaft der ersten Anwendung umfasst,
und das Hostsystem derart ausgebildet ist, folgende Schritte auszuführen:
- Empfangen der ersten Bereitstellungsinformation (BI1) und der ersten Integritätsrichtlinie (IR11) von einem Benutzer der ersten Anwendung auf der Laufzeitumgebung,
   vor dem Start einer ersten Containerinstanz der ersten Anwendung,
   - Überprüfen der ersten Bereitstellungsinformation gegenüber einer zweiten Integritätsrichtlinie, die einer zweiten Bereitstellungsinformation der zweiten Anwendung zugeordnet ist, für jede zweite Anwendung,
   - Überprüfen der zweiten Bereitstellungsinformationen für jede der zweiten Anwendungen gegenüber der ersten Integritätsrichtlinie,
   - Melden eines Verstoßes, umfassend die Eigenschaften der erste Bereitstellungsinformation gegen die mindestens eine der zweiten Integritätsrichtlinien verstößt, und die Eigenschaften der zweiten Bereitstellungsinformation gegen die erste Integritätsrichtlinie verstößt an den Benutzer,
   - Durchführen einer Operation zum Beheben des mindestens einen Verstoßes, und
- Ausführen der Containerinstanz auf der Laufzeitumgebung.

In dem System werden Einschränkungen für die Laufzeitumgebung abhängig von der bereitgestellten ersten und allen zweiten Bereitstellungsinformation und der zugeordneten Integritätsrichtlinie gestaltet. Somit werden die Einschränkungen für die Laufzeitumgebung nicht mehr isoliert und plattform-weit zentral erstellt, sondern werden dynamisch in Abhängigkeit von den installierten Anwendungen angepasst.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "überprüfen", "melden", "durchführen", und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und die darin enthaltene Zuordnungseinheit und Hostsysteme können einen oder mehrere Prozessoren umfassen. Das System ist derart ausgebildet, jeden beschriebenen Verfahrensschritt durchzuführen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: mehrere containerisierte Anwendungen mit jeweils einer zugeordneten erfindungsgemäßen Integritätsrichtlinie in schematischer Darstellung;
- Fig. 2: ein Ausführungsbeispiel des erfindungsgemäßen Verfahrens als Ablaufdiagramm;
- Fig. 3: ein erstes Ausführungsbeispiel der erfindungsgemäßen Systems in Blockdarstellung.

Einander entsprechende Teile sind in allen Figuren mit den gleichen Bezugszeichen versehen.

Software-Anwendungen, beispielsweise im industriellen Umfeld, werden als Container-basierte Anwendung mittels Software-Containern auf einer Laufzeitumgebung eines Hostsystem, beispielsweise einem Steuerungsgerät, ausgeführt. Auf dem Hostsystem werden häufig mehrere Container-basierte Anwendungen betrieben. Um zu verhindern, dass eine Containerinstanz, die in unterschiedlichen Anwendungen verwendet und somit in verschiedenen Bereitstellungsinformationen spezifiziert wird, vertrauliche Daten oder Laufzeitkonfigurationen einer der anderen Anwendung bzw. Bereitstellungsinformationen auslesen oder verändern kann, werden Integritätsbedingungen an die Containerinstanz wie folgt gestellt. Im Weiteren werden Container-basierte Anwendungen kurz als Anwendung bezeichnet.

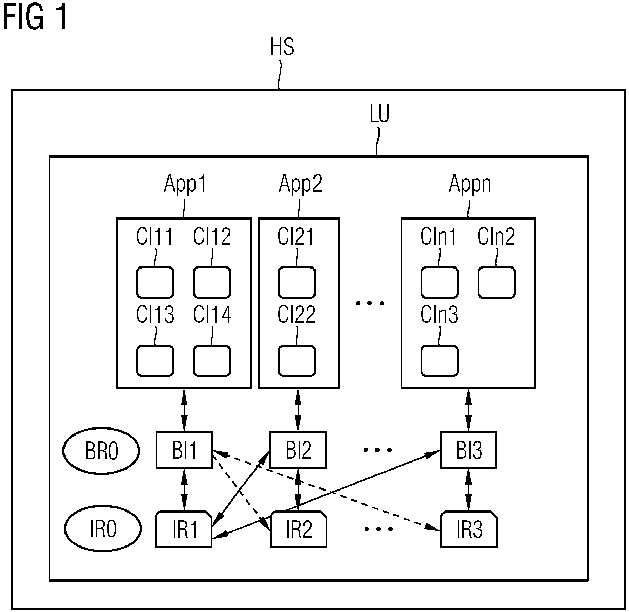

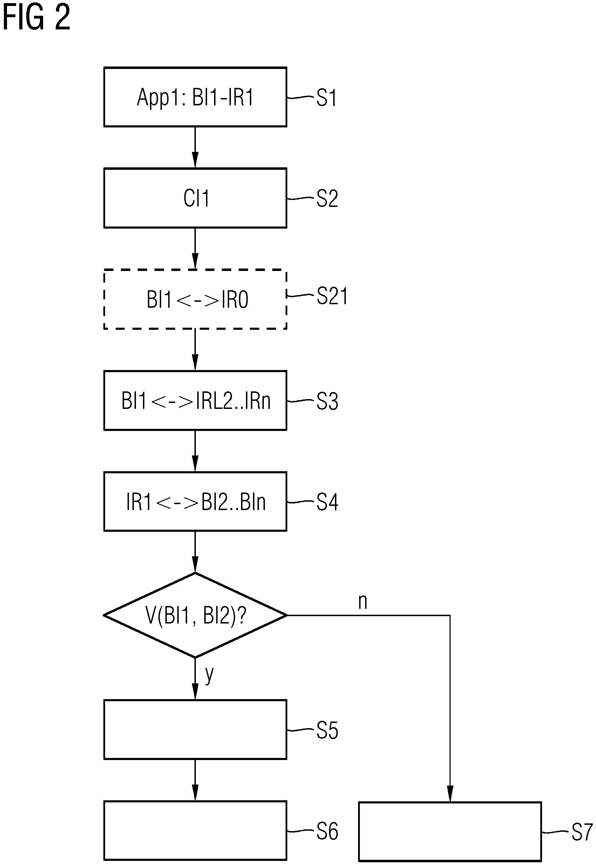

Anhand von Fig. 1 und Fig. 2 wird das Verfahren zur Durchsetzung von Integritätsbedingungen beschrieben.

Im Weiteren wird eine Anwendung, die bereits auf einer Laufzeitumgebung ausgeführt wird als eine zweite Anwendung bezeichnet. Eine Containerinstanz, die einer der zweiten Anwendungen zugeordnet ist und zumindest einen Teil der Funktionalität der zweiten Anwendung bereitstellt, wird im Weiteren als eine zweite Containerinstanz bezeichnet. Wird eine Anwendung nicht durch eine einzige Containerinstanz bereitgestellt, sondern durch einen Verbund aus mehreren Containerinstanzen implementiert, beispielsweise bei einer Microservice-basierten Anwendungsarchitektur, so umfasst eine zweite Anwendung mehr als eine zweite Containerinstanz.

Fig. 1 zeigt eine Laufzeitumgebung LU, die auf einem Hostsystems HS bereitgestellt wird. Auf der Laufzeitumgebung LU wird bereits mindestens eine zweite Anwendung App2,..., Appn ausgeführt. Die zweiten Anwendungen App2,..., Appn werden durch jeweils mindestens eine zweite Containerinstanz CI21, CI22, ... , CIn1,CIn2, CIn3 bereitgestellt. Jeder zweiten Anwendung App2,... Appn ist eine Bereitstellungsinformation BI2,..., BIn zugeordnet. In jeder der Bereitstellungsinformationen BI1, BI2,..., BIn werden Berechtigungen definiert, welche das Zusammenspiel der Containerinstanzen CI21, CI22 bzw. CIn31, ..., CIn3 bzw deren virtuelle Infrastruktur definieren. Somit wird in der Bereitstellungsinformationen BI2,..., BIn festlegt, wie die einzelnen zur Anwendung gehörenden Containerinstanzen CI21, CI22 bzw. CIn1, CIn2, CIn3 miteinander kommunizieren. Die Bereitstellungsinformation BI2, ..., BIn kann beispielsweise eine "docker-compose" Datei einer Docker-basierten Containerlaufzeitumgebung oder beispielsweise eine Kubernetes-Yaml-Datei in einer orchestrierten Umgebung. Erfindungsgemäß ist jeder zweiten Bereitstellungsinformation BI2, ..., BIn eine Integritätsrichtlinie IR2, ..., IRn zugeordnet.

Um Integritätsanforderungen für eine erste Anwendung App1, die zusätzlich auf der Laufzeitumgebung LU ausgeführt werden soll, durchsetzen zu können wird in einem ersten Verfahrensschritt S1, siehe Fig.1, eine erste Integritätsrichtlinie IR1 zu einer ersten Bereitstellungsinformation BI1 der ersten Anwendung Appl zugeordnet. Die erste Integritätsrichtlinie (IR1) wird der ersten Bereitstellungsinformation (BI1) zugeordnet, indem die erste Integritätsrichtlinie (IR1) als ein Bestandteil der ersten Bereitstellungsinformation (BI1) angeordnet wird und/oder eine gemeinsame digitale Signatur über die erste Integritätsrichtlinie (IR1) und die ersten Bereitstellungsinformation (BI1) erstellt wird, oder eines eindeutiger Kenner der ersten Integritätsrichtlinie (IR1) und der ersten Bereitstellungsinformation (BI1) zugewiesen wird. Die Bereitstellungsinformation kann beispielsweise gemeinsam mit der Integritätsrichtline signiert werden, sie kann Bestandteil der Bereitstellungsrichtline sein oder kann über eindeutige Bezeichner wie dem Namen der Anwendung oder zugewiesenen eindeutigen Labels referenziert werden.

Die erste Integritätsrichtlinie IR1 umfasst mindestens eine Anforderung mit Bezug auf die mindestens eine zweite Anwendung App2,..., Appn und die erste Bereitstellunginformation BI1 umfasst mindestens eine Eigenschaft in Bezug auf eine Konfiguration der ersten Anwendung Appl.

Wird die erste Bereitstellungsinformation BI1 und die ersten Integritätsrichtlinie IR1 auf der Laufzeitumgebung LU von einem Benutzer der ersten Anwendung Appl empfangen, siehe Verfahrensschritt S2, wird vor dem Start einer ersten Containerinstanz CI1 der ersten Anwendung App1, die erste Bereitstellungsinformation BI1 gegenüber einer zweiten Integritätsrichtlinie IR2, die der zweiten Bereitstellungsinformation BI2 der zweiten Anwendung App2 zugeordnet ist, überprüft. Dies wir für jede zweite Anwendung App2,..., Appn durchgeführt, siehe Verfahrensschritt S3. Des Weiteren wird die zweite Bereitstellungsinformationen BI2, ..., BIn für jede der zweiten Anwendungen App2, ..., Appn gegenüber der ersten Integritätsrichtlinie IR1 überprüft, siehe Verfahrensschritt S4.

Wenn ein Verstoß der ersten Bereitstellungsrichtlinie BI1 gegenüber mindestens einer der zweiten Integritätsrichtlinien IR2,..., IRn der bereits ausgeführten zweiten Anwendungen App2, ..., Appn bei der Überprüfung ermittelt wird und/oder ein Verstoß der ersten Integritätsrichtlinie IR1 gegenüber mindestens einer der zweiten Bereitstellungsrichtlinien BI2, ..., BIn bei der Überprüfung ermittelt wird, wird der mindestens eine Verstoß an den Benutzer gemeldet, siehe Verfahrensschritt S5. Dabei werden die Eigenschaften in der erste Bereitstellungsinformation BI1 gegen die mindestens eine der zweiten Integritätsrichtlinien IR2, ..., IRn verstößt, und die Eigenschaften in der zweiten Bereitstellungsinformation BI2, ..., BIn gegen die die ersten Integritätsrichtlinien IR1 verstößt, an den Benutzer übermittelt. Anschließend wird eine Operation zum Beheben des mindestens einen Verstoßes durchgeführt, siehe S5.

Konnte der Verstoß erfolgreich behoben werden, wird die der ersten Containerinstanz CI1 auf der Laufzeitumgebung ausgeführt, siehe S6.

Wird bei der Überprüfung S3 der ersten Bereitstellungsinformation BI1 und der Überprüfung S4 der ersten Integritätsrichtlinie IR1 kein Verstoß ermittelt, wird die Containerinstanz entsprechend den Vorgaben der ersten Bereitstellungsinformation BI1 ausgeführt, siehe Verfahrensschritt S7.

Die erste Integritätsrichtlinie IR1 und die erste Bereitstellungsinformation BI1 werden von einem Erzeuger ersten Bereitstellungsinformation BI1 bereitgestellt.

Die grundlegende Idee der Erfindung besteht darin, dass für die erste Anwendung Appl bzw. die erste Bereitstellunginformation BI1 seitens des Erstellers der Bereitstellungsinformation BI1 Anforderungen an andere, zweite Containerinstanzen bzw Instanzen anderer, zweiter Anwendungen App2, ..., Appn gestellt werden können. Diese werden in der ersten Integritätsrichtlinie IR1 gesammelt, mit der Bereitstellungsinformation BI1 verknüpft und von der Laufzeitumgebung LU überprüft und durchgesetzt. Die gesamte erste Bereitstellungsinformation BI1 wird hierbei vom Erzeuger, beispielsweise Entwickler, der ersten Anwendung Appl spezifiziert. Die erste Integritätsregel IR1 kann zusätzlich auch Anforderungen an die eigenen, ersten Containerinstanzen CI11,..., CI14 enthalten.

Liegt eine Laufzeit-Integritätsrichtlinie IR0 für die Laufzeitumgebung vor, wird die erste Bereitstellungsinformation BI11 gegenüber der Laufzeit-Integritätsrichtlinie IR0 der Laufzeitumgebung LU überprüft und ein Verstoß, umfassend diejenigen Eigenschaften der ersten Bereitstellungsinformation, die gegen die Laufzeit-Integritätsrichtlinie IR0 verstoßen, an den Benutzer gemeldet, siehe Verfahrensschritt S21. Bevorzugter Weise wird die Laufzeit-Integritätsrichtlinie IR0 geprüft, bevor die erste Integritätsrichtlinien IR1 überprüft wird. D.h., sobald eine erste Containerinstanz CI11,..., CI4 auf der Laufzeitumgebung LU gestartet werden soll, wird zunächst von der Laufzeitumgebung LU beispielsweise mit Hilfe eines Plugins überprüft, ob das Ausführen der erste Containerinstanz CI11,..., CI4 gegen eine spezifizierte Laufzeit-Integritätsrichtlinie IR0 der Laufzeitplattform und auch gegen anderer auf der Laufzeitumgebung eingerichtete zweite Anwendungen APP2, ..., Appn verstößt.

Die erste Integritätsrichtlinie IR1 enthält mindestens eine Anforderung an die zweite Anwendung App2 mit Bezug auf Privilegien zur Ausführung von Operationen. Privilegien sind spezielle Ausführungsoptionen. Durch die Zuweisung von Privilegien bzw deren Entzug können Containerinstanzen unterschiedlich berechtigt und/oder isoliert werden. Beispiele sind hierbei eine Zuordnung von bestehenden Linux- und Kubernetes-Namespaces, Seccomp-Profilen und Capabilities. Hiermit wird sichergestellt, dass eine zweite Anwendung App2, ..., Appn nicht auf die erste Anwendung Appl selbst zugreifen kann. Weitere Anforderungen, die in der ersten Integritätsrichtlinie IR1 optional enthalten sind, sind Zugriffsberechtigungen auf vorgegebene Dateisystempfade, eine vorgegebene Signatur oder einer vorgegebener Erzeuger der zweiten Anwendung App2,..., Appn.

Zweite Containerinstanzen CI21,..., CIn3 dürfen beispielsweise nicht privilegiert sein oder müssen die in der ersten Integritätsregel vorgegebene Signatur aufweisen und somit beispielsweise von einem bestimmten Erzeuger von Anwendungen stammen, um bestimmte Rechte zu erhalten. Zweite Anwendungen dürfen beispielsweise nur unter bestimmten Bedingungen auf definierte Pfade zugreifen oder nur als nicht-privilegierter Benutzer Prozesse innerhalb der zweiten Containerinstanz ausführen.

Die zweite Bereitstellungsinformation BI1, ..., BIn und die zweite Integritätsrichtlinie IR2, ..., IRn sind persistent auf dem Hostsystem gespeichert sind und die erste Bereitstellungsinformation BI1 und die zugeordnete erste Integritätsrichtlinie IR1 werden nach dem Beheben des Verstoßes auf dem Hostsystem HS gespeichert.

Die Anforderungen, beispielsweise Einschränkungen, können für alle ersten und zweiten Containerinstanzen CI11, ..., CIn3 gelten oder nur für die zweiten Containerinstanzen CI21, ..., CIn3 gelten. Jede der Anforderungen in der ersten Integritätsrichtlinie IR1 ist für die zweite Anwendung App2, ..., Appn als Ganzes gültig oder gültig für mindestens eine der zweiten Containerinstanzen der zweiten Anwendung App2, ..., Appn oder gültig für sowohl die ersten Containerinstanzen CI11, ..., CI14 als auch die zweiten Containerinstanzen CI21, ..., CIn3. Ein Geltungsbereich der ersten Integritätsrichtlinie IR1 wird durch eine Sprungmarke, die mindestens einem Containerabbild CI11, ..., CIn3 oder mindestens einer zweiten Bereitstellungsinformationen BI2, ..., Bn zugeordnet ist, festgelegt. Die Einschränkungen können somit für alle Containerinstanzen CI11, ..., CIn3 gelten oder nur für die Containerinstanzen anderer Apps gelten. Der Geltungsbereich kann z.B. auf einzelne Containerabbilder und/ oder spezifizierte Labels eingeschränkt werden, die entweder den Containerabbildern selbst oder der Bereitstellungsinformation BI1, ..., Bin zugewiesen sind.

Gleichartige Containerinstanzen, d.h. Containerinstanzen, die vom gleichen Containerabbild abstammen, können hierdurch innerhalb unterschiedlicher Anwendungen unterschiedlich berechtigt werden. Die erste Integritätsrichtlinie IR1 kann auch eigene Funktionen umfassen, in welcher der Ersteller der Anwendung Appl auch eigene Bedingungen bzw. Anforderungen definieren kann und nicht abhängig von den von der Container-Laufzeitumgebung LU vordefinierten Bedingungen in der Integritätsrichtlinie IR0 der Laufzeitumgebung ist.

Für die Erfindung wird grundsätzlich angenommen, dass der Container-Laufzeitumgebung und dem darunterliegenden Host vertraut wird. Des Weiteren gelten die Eigenschaften und Merkmale der ersten Bereitstellungsrichtlinie BI1 und der ersten Integritätsrichtlinie IR1 in gleicher Weise für die zweiten Bereitstellungsrichtlinien BI2, ..., BIn und der zweiten Integritätsrichtlinien IR2, ..., IRn.

Sobald die erste Containerinstanz CI1 auf einer Laufzeitumgebung LU gestartet werden soll, wird zunächst von der Laufzeitumgebung LU, beispielsweise mit Hilfe eines Plugins überprüft, ob das Starten der ersten Containerinstanz CI1 gegen eine spezifizierte Richtlinie der Laufzeitplattform, beispielsweise der Laufzeit-Integritätsrichtlinie IR0 und gegen eine der Integritätsrichtlinien IR2,..., IRn der zweiten Anwendungen App2,..., Appn verstößt Um erkennen zu können, gegen welche der zweiten Integritätsrichtlinie verstoßen wird, muss die erste Bereitstellungrichtlinie BI1 gegenüber allen bereits installierten zweiten Integritätsrichtlinien IR2,..., IRn überprüft werden. Es ist dabei wichtig, dass zur Ermittlung der Erlaubnisberechtigung nicht beim ersten Verstoß einer zweiten Integritätsrichtlinie die Überprüfung abgebrochen wird.

Die ersten und zweiten Integritätsrichtlinien können hierbei sowohl Anwendungsspezifisch als auch Plattformspezifisch, also global vom Betreiber der Plattform, vordefiniert werden. Werden Verstöße gegen mindestens eine der Integritätsrichtlinien IR0, IR1,..., IRn, ermittelt, meldet die Laufzeitumgebung LU dem Bereitstellungssystem, bzw. dem Benutzer zurück, welche Anforderungen in der Laufzeit-Integritätsrichtlinie IR0 und/oder welche Anforderungen in den zweiten Integritätsregeln IR2, ..., IRn die Installation der ersten Containerinstanz CI1 oder auch der ersten Anwendung Appl als Ganzes verhindern. Das Bereitstellungssystem ist in dem Zusammenhang die Orchestrierungseinheit, die eine automatische Konfliktlösung durchführen kann.

Bei dem Verstoß gegen plattformspezifische Laufzeit-Integritätsrichtlinie IR0 wird die Installation der ersten Containerinstanz abgebrochen. Bei Verstößen gegen Anwendungsspezifische zweite Integritätsrichtlinien IR2, ..., IRn wird wie im Folgenden beschrieben verfahren:
In einer ersten Variante wird dem Benutzer über eine Benutzerschnittstelle angezeigt, dass die Installation der ersten Containerinstanz CI1 oder der ersten Anwendung APP1 nicht durchgeführt werden kann. Dabei werden die Anforderungen von denjenigen zweiten Integritätsrichtlinien IR2,..., IRn gegen die die erste Bereitstellungsinformation BI1 verstößt, und somit die Installation der ersten Anwendung verhindern, angezeigt.

Der Benutzer kann dann interaktiv entscheiden, ob die den Konflikt verursachenden zweiten Anwendungen und die diesen zweiten Anwendungen zugeordneten Integritätsrichtlinien gelöscht werden sollen. Über die Benutzerschnittstelle kann optional mindestens eine Instruktion zur Behebung des Verstoßes vom Benutzer empfangen werden. Beispiele für Instruktionen sind ein Löschen oder ein Nicht-Installieren der zweiten Anwendungen, die den Konflikt erzeugen.

Optional wird die Behebung des Verstoßes über die Benutzerschnittstelle oder über die vordefinierte Regel und weitere Modalitäten zur Behebung des Verstoßes in einer Anwendungsspezifischen Bereitstellungsrichtlinie BR0 auf der Laufzeitumgebung LU bereitgestellt.

In einer zweiten Variante sind mindestens eine vordefinierte Regel zur Behebung des Verstoßes und daraus resultierende Instruktionen in der Laufzeitumgebung LU enthalten. Es wird somit innerhalb der Laufzeitumgebung LU das Verhalten beim Auftreten eines Verstoßes definiert. Hierbei ist es möglich, dass Bereitstellungsformationen z.B. aufgrund der bereitgestellten Signaturen und der damit einhergehenden Assoziation zum Erzeuger der Anwendung unterschiedlich priorisiert werden. Beispielsweise werden Anwendungen, die von einem vorgegebenen Erzeuger A bereitgestellt werden, vorrangig installiert. Beim Auftreten eines Verstoßes werden die den Verstoß verursachenden Anwendungen automatisch gelöscht. Mit der gelöschten Anwendung wird auch die für die Anwendung hinterlegte Integritätsrichtlinie gelöscht. Die zu löschende Anwendung kann eine oder mehrere zweite Anwendungen App1, ..., Appn, aber auch die erste Anwendung Appl sein.

Die unterschiedlichen Varianten können in einer Bereitstellungsrichtlinie BI0 auf der Laufzeitumgebung LU definiert werden oder als Konfigurationsparameter übergeben werden. Alternativ ist es auch möglich, die den Verstoß verursachenden Anwendungen nicht zu löschen, sondern nur als zu löschen zu markieren und innerhalb einer gesicherten Transaktion durchzuführen.

Des Weiteren wird überprüft, siehe Verfahrensschritt S4, ob die neu zu installierende erste Containerinstanz CI1 der ersten Anwendung Appl aufgrund der Integritätsrichtlinie IR1 einen Konflikt bzw. Verstoß für die bereits installierten zweiten Containerinstanzen bzw. deren Bereitstellungsinformation BI2, ..., BIn verursacht, sobald diese zweiten Containerinstanzen neu gestartet werden müssen. Hierzu wird die Integritätsrichtline IR1 der neu zu installierenden ersten Anwendung Appl von der Laufzeitumgebung LU verwendet und gegen sämtliche persistent gespeicherten Bereitstellungsinformationen BI2, ..., BIn der bestehenden zweiten Anwendungen App2, ..., Appn abgeglichen. Wird ein Verstoß festgestellt, erfolgt die Behebung des Konfliktes mit Hilfe der oben beschrieben Varianten. Der Konflikt wird gelöst, indem die zweiten Anwendungen gelöscht werden, deren Bereitstellungsinformation BI2,..., BIn gegen die erste Integritätsrichtlinie verstoßen.

Sind alle Konflikte durch Löschen der jeweiligen zweiten Anwendungen behoben, wird die erste Bereitstellungsinformation BI1 und die applikationsspezifische erste Integritätsrichtlinie IR1 innerhalb der Laufzeitumgebung LU persistiert gespeichert und die erste Bereitstellungsinformation BI1 wird neu gestartet.

In einem Ausführungsbeispiel umfasst die erste Bereitstellungsinformation BI1 eine Standardkonfiguration und mindestens eine Rückfallkonfiguration der Laufzeitumgebung LU für die erste Anwendung App1, wobei die Rückfallkonfiguration geringere Eigenschaften in Bezug auf Privilegien zur Ausführung von Operationen, Zugriffsberechtigungen auf vorgegebene Dateisystempfade, die vorgegebene Signatur oder den vorgegebenen Erzeuger gegenüber der Standardkonfiguration umfasst. Zum Beheben des Verstoßes wird die erste Anwendung Appl entsprechend einer der Rückfallkonfigurationen dynamisch durch die Laufzeitumgebung LU konfiguriert.

In der ersten Bereitstellungsinformation BI1 bietet die erste Anwendung Appl eine bevorzugte Standardkonfiguration der Laufzeitumgebung LU für die erste Anwendung Appl an. Die Rückfallkonfiguration umfasst Einstellungen welche weniger Privilegien als die Standardkonfiguration erfordern. Bei der Überprüfung der auf der Laufzeitumgebung LU gespeicherten applikationsspezifischen Integritätsrichtlinien IR2, ..., IRn kann die Laufzeitumgebung LU einzelne Rückfalloptionen wählen, sobald ein Verstoß gegen mindestens eine der zweiten Integritätsrichtlinien IR2, ..., IRn einer zweiten Anwendung App2, ..., Appn festgestellt wird. Da die Überprüfung und der Abgleich der ersten und der zweiten Integritätsrichtlinien IR1, ... IRn beim Start von ersten Containerinstanzen CI1 durchgeführt wird, kann neben dem Löschen einer konfliktverursachenden zweiten Anwendung, die erste Anwendung Appl auch durch die Laufzeitumgebung LU dynamisch umkonfiguriert und neu gestartet werden, sodass die erste Containerinstanz CI1 konform zu den Laufzeitbedingungen der übrigen zweiten Anwendungen App2, ..., Appn ist.

Der Installationsvorgang einer ersten Containerinstanz CI1 und Integritätsrichtline IR1 sowie die beiden beschriebenen Überprüfungen des Konformitätstests werden innerhalb einer gesicherten Transaktion durchgeführt.

Wird eine Anwendung von einer alten auf eine neue Version aktualisiert, so wird eine entsprechende neue Version der Integritätsrichtlinie nicht mit der alten Version der Anwendung abgeglichen.

Das gleiche Verfahren kann statt auf einer Container-Laufzeitumgebung auch in einer orchestrierten Umgebung durchgeführt werden. In der orchestrierten Umgebung werden Anwendungen und deren Containerinstanzen auf unterschiedliche Hostsysteme verteilt angeordnet und durch eine Orchestrierungseinheit installiert und verwaltet. Die Überprüfung der Integritätsrichtlinien IR1, ..., IRn und deren Durchsetzung übernimmt in diesem Fall die Orchestrierungseinheit.

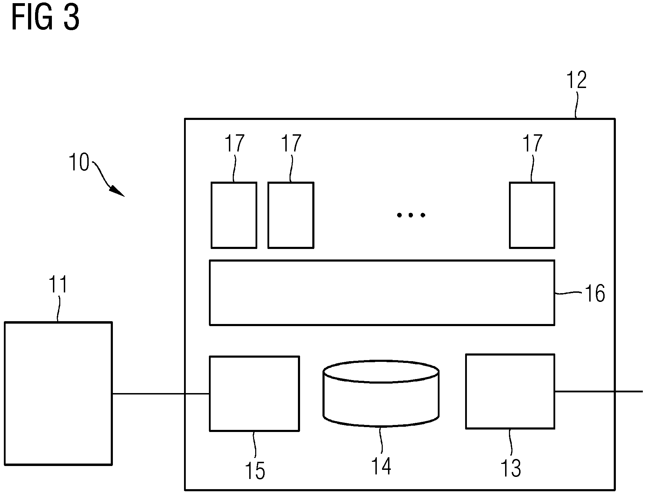

Fig. 3 zeigt ein System 10 zur Durchsetzung von Integritätsbedingungen der ersten Container-basierten Anwendung Appl gegenüber allen zweiten Container-basierten Anwendungen App2, ..., Appn, das derart konfiguriert ist die Verfahrensschritte des Verfahrens wie beschrieben durchzuführen. Das System 10 umfasst eine Zuordnungseinheit 11, ein Hostsystem 12, eine Benutzerschnittstelle 13, eine Speichereinheit 14, eine Datenschnittstelle 15 und eine Laufzeitumgebung 16.

Die Zuordnungseinheit 11 ist derart ausgebildet, die erste Integritätsrichtlinie IR1 zur ersten Bereitstellungsinformation BI1 der ersten Anwendung Appl zuzuordnen. Das Hostsystem 12 und die darauf angeordnete Laufzeitumgebung 16 ist derart ausgebildet die ersten Bereitstellungsinformation BI1 und die erste Integritätsrichtlinie IR11 der ersten Anwendung Appl von einem Benutzer über die Datenschnittstelle 15 zu empfangen. Die Laufzeitumgebung 16 ist des Weiteren derart ausgebildet vor dem Start der ersten Containerinstanz CI1 der ersten Anwendung, die Verfahrensschritte S3, S4 zum Überprüfen der ersten Bereitstellungsinformation BI1 gegenüber einer zweiten Integritätsrichtlinie IR2, zum Überprüfen der zweiten Bereitstellungsinformationen für jede der zweiten Anwendungen gegenüber der ersten Integritätsrichtlinie IR1 durchzuführen. Die Laufzeitumgebung 16 ist derart ausgebildet, die ersten und zweiten Containerinstanzen CI11, .., CIn4, in Fig.3 allgemein mit dem Referenzzeichen 17 gekennzeichnet, auszuführen.

Die Benutzerschnittstelle 13 ist derart ausgebildet, von der Laufzeitumgebung 16 ermittelte Verstöße an den Benutzer zu melden und anzuzeigen sowie Instruktionen zur Behebung des mindestens einen gemeldeten und angezeigten Verstoßes vom Benutzer zu empfangen.

Die Laufzeitumgebung 16 ist derart ausgebildet, die mindestens eine Operation zum Beheben des mindestens einen Verstoßes auszuführen. Sind die Konflikte bzw. Verstöße behoben, führt die Laufzeitumgebung 16 die erste Containerinstanz IR1 aus.

Der Ersteller einer Bereitstellungsinformation kann mit Hilfe der von ihm bereitgestellten Integritätsrichtlinien Anforderungen an die Konfiguration anderer, d.h. zweiter Anwendungen stellen. Ein typisches Beispiel ist hierbei, dass ein Entwickler der ersten Anwendung verhindern möchte, dass andere Anwendungen auf einem Hostsystem, beispielsweise einem Gerät, erhöhte Privilegien erhalten und hierdurch Daten einer anderen zweiten Anwendung auslesen oder modifizieren können. Laufzeiteinschränkungen für eine Container-Laufzeitumgebung können abhängig von der bereitgestellten Bereitstellungsinformation gestaltet werden und somit nicht mehr isoliert und plattform-weit zentral erstellt werden, sondern dynamisch in Abhängigkeit der installierten Anwendungen angepasst werden. Bestehende zentral und plattformweit bereitgestellte Einschränkungen können zusätzlich zu den App-spezifischen Einschränkungen definiert werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Durchsetzung von Integritätsbedingungen einer ersten Container-basierten Anwendung (Appl) gegenüber allen zweiten Container-basierten Anwendungen (App2), die auf einer gemeinsamen Laufzeitumgebung (LU) eines Hostsystems (HS) ausgeführt werden, umfassend:
- Zuordnen (S1) einer ersten Integritätsrichtlinie (IR1) zu einer ersten Bereitstellungsinformation (BI1) der ersten Anwendung (Appl), wobei die erste Integritätsrichtlinie (IR1) mindestens eine Anforderung mit Bezug auf die zweite Anwendung (App2) und die erste Bereitstellunginformation (BI1) mindestens eine Eigenschaft der ersten Anwendung (Appl) umfasst,
- Empfangen (S2) der ersten Bereitstellungsinformation (BI1) und der ersten Integritätsrichtlinie (IR1) von einem Benutzer der ersten Anwendung (Appl) auf der Laufzeitumgebung (LU),
vor dem Start einer ersten Containerinstanz (CI1) der ersten Anwendung (Appl),
- Überprüfen (S3) der ersten Bereitstellungsinformation (BI1) gegenüber einer zweiten Integritätsrichtlinie (IR2, ..., IRn) , die einer zweiten Bereitstellungsinformation (BI2, ..., BIn) der zweiten Anwendung (App2, ..., Appn) zugeordnet ist, für jede zweite Anwendung (App2, ..., Appn)
- Überprüfen (S4) der zweiten Bereitstellungsinformationen (BI2) für jede der zweiten Anwendungen (App2, ..., Appn) gegenüber der ersten Integritätsrichtlinie (IR1),
- Melden (S5) eines Verstoßes, umfassend die Eigenschaften in der erste Bereitstellungsinformation (BI1) gegen die mindestens eine der zweiten Integritätsrichtlinien (IR2, ..., IRn) verstößt, und die Eigenschaften in der zweiten Bereitstellungsinformation (BI2, ..., BIn) gegen die die ersten Integritätsrichtlinien (IR1) verstößt an den Benutzer,
- Durchführen (S5) einer Operation zum Beheben des mindestens einen Verstoßes, und
- bei erfolgreichem Beheben des Verstoßes, Ausführen (S6) der ersten Containerinstanz (CI1) auf der Laufzeitumgebung (LU).

2. Verfahren nach Anspruch 1, wobei die erste Integritätsrichtlinie (IR1) und die erste Bereitstellungsinformation (BI1) von einem Erzeuger der ersten Bereitstellungsinformation (BI1) bereitgestellt werden.

3. Verfahren nach einem der vorangehenden Ansprüche, wobei
- die erste Bereitstellungsinformation (BI11) gegenüber einer Laufzeit-Integritätsrichtlinie (IR0) der Laufzeitumgebung (LU) überprüft wird und
ein Verstoß, umfassend diejenigen Eigenschaften der ersten Bereitstellungsinformation (BI1), die gegen die Laufzeit-Integritätsrichtlinie (IR0) verstoßen, an den Benutzer gemeldet wird.

4. Verfahren nach einem der vorangehenden Ansprüche, wobei die zweite Bereitstellungsinformation (BI2, ..., BIn) und die zweite Integritätsrichtlinie (IR2, ..., IRn) persistent auf dem Hostsystem gespeichert sind und die erste Bereitstellungsinformation (BI1) und die zugeordnete erste Integritätsrichtlinie (IR1) nach dem Beheben des Verstoßes auf dem Hostsystem (HS) gespeichert werden.

5. Verfahren nach einem der vorangehenden Ansprüche, wobei die erste Integritätsrichtlinie (IR1) der ersten Bereitstellungsinformation (BI1) zugeordnet wird, indem die erste Integritätsrichtlinie (IR1) als ein Bestandteil der ersten Bereitstellungsinformation (BI1) angeordnet wird und/oder eine gemeinsame digitale Signatur über die erste Integritätsrichtlinie (IR1) und die ersten Bereitstellungsinformation (BI1) erstellt wird, oder eines eindeutiger Kenner der ersten Integritätsrichtlinie (IR1) und der ersten Bereitstellungsinformation (BI1) zugewiesen wird.

6. Verfahren nach einem der vorangehenden Ansprüche, wobei die erste Integritätsrichtlinie (IR1) mindestens eine Anforderung an die zweite Anwendung (App2, ..., Appn) enthält mit Bezug auf:
- Privilegien zur Ausführung von Operationen,
- Zugriffsberechtigungen auf vorgegebene Dateisystempfade,
- eine vorgegebene Signatur,
- einen vorgegebenen Erzeuger der zweiten Anwendung (App2, ..., Appn).

7. Verfahren nach Anspruch 6, wobei jede der Anforderungen in der ersten Integritätsrichtlinie (IR1) gültig für die zweite Anwendung (App2, ..., Appn) als Ganzes oder gültig für mindestens eine der zweiten Containerinstanzen (CI21, ..., CIn3) der zweiten Anwendung (App2, ..., Appn) oder gültig für sowohl die ersten Containerinstanzen (CI11, ..., CI14) als auch die zweiten Containerinstanzen (CI21, ..., CIn3) ist.

8. Verfahren nach einem der vorangehenden Ansprüche, wobei ein Geltungsbereich der ersten Integritätsrichtlinie (IR1) durch eine Sprungmarke, die mindestens einem Containerabbild oder mindestens einer zweiten Bereitstellungsinformationen (BI2, ..., BIn) zugeordnet ist, festgelegt wird.

9. Verfahren nach einem der vorangehenden Ansprüche, wobei über eine Benutzerschnittstelle (13) der Verstoß dem Benutzer angezeigt wird und eine Instruktion zur Behebung des Verstoßes durch den Benutzer empfangen wird.

10. Verfahren nach einem der Ansprüche 1-8, wobei mindestens eine vordefinierte Regel zur Behebung des Verstoßes und daraus resultierende Instruktionen in der Laufzeitumgebung (LU) enthalten sind.

11. Verfahren nach Anspruch 8 oder 9, wobei die Behebung des Verstoßes über die Benutzerschnittstelle (13) oder über die vordefinierte Regel und weitere Modalitäten zur Behebung des Verstoßes in einer Anwendungsspezifischen Bereitstellungsrichtlinie (BR0) auf der Laufzeitumgebung (LU) bereitgestellt wird.

12. Verfahren nach einem der vorangehenden Ansprüche, wobei die erste Bereitstellungsinformation (BI1) eine Standardkonfiguration und mindestens eine Rückfallkonfiguration der Laufzeitumgebung (LU) für die erste Anwendung umfasst, wobei die Rückfallkonfiguration geringere Eigenschaften in Bezug auf Privilegien zur Ausführung von Operationen, Zugriffsberechtigungen auf vorgegebene Dateisystempfade, die vorgegebene Signatur oder den vorgegebenen Erzeuger gegenüber der Standardkonfiguration umfasst, und zum Beheben des Verstoßes die erste Anwendung (Appl) entsprechend einer der Rückfallkonfigurationen dynamisch durch die Laufzeitumgebung (LU) konfiguriert wird.

13. Verfahren nach einem der vorangehenden Ansprüche, wobei in einer orchestrierten Umgebung eine Orchestrierungseinheit das Überprüfen, Melden und Beheben durchführt.

14. System zur Durchsetzung von Integritätsbedingungen einer ersten Container-basierten Anwendung (Appl) gegenüber allen zweiten Container-basierten Anwendungen (App2), die auf einer gemeinsamen Laufzeitumgebung (LU, 16) eines Hostsystems (HS, 12) ausgeführt werden, umfassend eine Zuordnungseinheit (11), die derart ausgebildet ist,
- eine erste Integritätsrichtlinie (IR1) zu einer ersten Bereitstellungsinformation (BI1) der ersten Anwendung (Appl) zuordnen, wobei die ersten Integritätsrichtlinie (IR1) mindestens eine Anforderung mit Bezug auf die zweite Anwendung (App2, ..., Appn) und die erste Bereitstellunginformation (BI1) mindestens eine Eigenschaft der ersten Anwendung (Appl) umfasst,
und das Hostsystem (HS, 12) derart ausgebildet ist die nachfolgenden Schritte auszuführen:
- Empfangen der ersten Bereitstellungsinformation (BI1) und der ersten Integritätsrichtlinie (IR11) von einem Benutzer der ersten Anwendung auf der Laufzeitumgebung (LU, 16), vor dem Start einer ersten Containerinstanz (CI1) der ersten Anwendung (Appl),
- Überprüfen der ersten Bereitstellungsinformation (BI1) gegenüber einer zweiten Integritätsrichtlinie (IR2), die einer zweiten Bereitstellungsinformation (BI2, ..., BIn) der zweiten Anwendung (App2, ..., Appn) zugeordnet ist, für jede zweite Anwendung (App2, ..., Appn),
- Überprüfen der zweiten Bereitstellungsinformationen (BI2, ..., BIn) für jede der zweiten Anwendungen (App2, ..., Appn) gegenüber der ersten Integritätsrichtlinie (IR1),
- Melden eines Verstoßes, umfassend die Eigenschaften in der erste Bereitstellungsinformation (BI1) gegen die mindestens eine der zweiten Integritätsrichtlinien (IR2, ..., IRn) verstößt, und die Eigenschaften der zweiten Bereitstellungsinformation (BI2, ..., BIn) gegen die die erste Integritätsrichtlinie (IR1) verstößt an den Benutzer,
- Durchführen einer Operation zum Beheben des mindestens einen Verstoßes, und
- Ausführen der ersten Containerinstanz (CI1) auf der Laufzeitumgebung.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.
